# EUROPÄISCHE PATENTSCHRIFT

(11) **EP 3 819 621 B1**
(45) Veröffentlichungstag und Bekanntmachung des Hinweises auf die Patenterteilung: **03.08.2022**
(21) Anmeldenummer: 20201231.6
(22) Anmeldetag: 12.10.2020
(51) Int. Cl.: G01M 17/02

(54) **POSITIONIEREINRICHTUNG FÜR EINEN PRÜFSENSOR EINER REIFENPRÜFMASCHINE**
POSITIONING DEVICE FOR A TEST SENSOR OF A TYRE TESTING MACHINE
DISPOSITIF DE POSITIONNEMENT POUR UN CAPTEUR D'ESSAI D'UNE MACHINE DE VÉRIFICATION DE PNEUS

(30) Priorität: 07.11.2019 DE 102019217168
(43) Veröffentlichungstag der Anmeldung: 12.05.2021
(73) Patentinhaber: Continental Reifen Deutschland GmbH, 30165 Hannover (DE)
(72) Erfinder: FRERICHS, Gesa, 30419 Hannover (DE); KASNY, Rostislav, 30419 Hannover (DE); BERGER, Markus, verstorben (DE)
(74) Vertreter: Continental Corporation

(56) Entgegenhaltungen:
- EP-A2- 1 207 382
- DE-A1- 2 325 240
- DE-U1-202019 104 565
- US-A- 6 089 083

## Beschreibung

Die Erfindung betrifft eine Positioniereinrichtung für einen Prüfsensor einer Reifenprüfmaschine, mit einer Führungseinrichtung und einem Sensorträger, an welchem der Prüfsensor befestigbar ist, wobei der Sensorträger an der Führungseinrichtung fixiert ist.

Ferner betrifft die Erfindung eine Reifenprüfmaschine mit einer Positioniereinrichtung für einen Prüfsensor und beweglichen Halterungen, an welchen die Positioniereinrichtung aufgehängt ist.

Darüber hinaus betrifft die Erfindung ein Verfahren zum Positionieren eines Prüfsensors einer Reifenprüfmaschine mittels einer Positioniereinrichtung, mit dem Schritt: Bewegen eines Sensorträgers, an welchem der Prüfsensor befestigt ist, in eine für die Durchführung einer Reifenprüfung geeignete Position, wobei der Sensorträger an einer Führungseinrichtung fixiert ist.

Reifenprüfmaschinen sollen üblicherweise zum Prüfen von Reifen unterschiedlicher Größe und/oder Geometrie eingesetzt werden. Zur Prüfung von unterschiedlichen Reifen ist daher regelmäßig zumindest ein Prüfsensor einer Reifenprüfmaschine in Abhängigkeit der Größe und/oder Geometrie des zu prüfenden Reifens vor dem Prüfvorgang zu positionieren.

Solche Prüfmachinen sind in der EP1207382, US6089083, DE2325240 und DE202019104565U offenbart.

Die Sensorpositionierung kann dabei grundsätzlich manuell oder automatisiert, d.h. selbsttätig durch die Reifenprüfmaschine, erfolgen. Da bekannte Positioniereinrichtungen häufig einen hohen Platzbedarf aufweisen und steuerungstechnisch und/oder mechanisch aufwendig sind, erfolgt die Sensorpositionierung in der Praxis jedoch häufig noch manuell. Bei der manuellen Sensorpositionierung besteht jedoch das Problem, dass die reifenspezifische Sensorposition nicht reproduzierbar einstellbar ist, sodass es zu inkonsistenten Prüfergebnissen kommt. Ferner besteht bei der manuellen Sensorpositionierung ein erhebliches Risiko einer Fehlpositionierung des Prüfsensors.

Die der Erfindung zugrundeliegende Aufgabe besteht somit in der Ermöglichung einer automatisierten Sensorpositionierung bei einer Reifenprüfmaschine, ohne dass die Positionierung steuerungstechnisch oder mechanisch besonders aufwendig ist.

Die Aufgabe wird gelöst durch eine Positioniereinrichtung der eingangs genannten Art, wobei die erfindungsgemäße Positioniereinrichtung zwei Schlitteneinheiten aufweist, welche von der Führungseinrichtung geführt und linear entlang der Führungseinrichtung verfahrbar sind, wobei die Schlitteneinheiten jeweils eine Aufhängestruktur aufweisen, mittels welcher die Positioniereinrichtung an beweglichen Halterungen der Reifenprüfmaschine aufhängbar ist.

Die Erfindung macht sich die Erkenntnis zunutze, dass die Kinematik der beweglichen Halterungen der Reifenprüfmaschine zum Ausrichten des Prüfsensors ausgenutzt werden kann. Es ist somit kein zusätzlicher Antrieb für die Positionierung des Prüfsensors notwendig. Vielmehr erfolgt die Positionierung des Prüfsensors über die Ausnutzung einer ohnehin vorhandenen Teilebewegung an der Reifenprüfmaschine. Somit kann die Positioniereinrichtung als passives, mitgeführtes System ausgebildet sein. Eine Fehlpositionierung des Prüfsensors wird durch die Kopplung der Bewegung des Prüfsensors an die Bewegung der Halterungen der Reifenprüfmaschine effektiv vermieden. Für die Sensorpositionierung wird außerdem keine zusätzliche Zykluszeit benötigt.

Die Führungseinrichtung und die Schlitteneinheiten bilden vorzugsweise eine antriebslose Lineareinheit aus. Die Führungseinrichtung kann eine Führungsschiene sein, auf welcher die Schlitteneinheiten entlanggleiten können. Der Sensorträger dient als Halteeinrichtung für den Prüfsensor. Insbesondere ist der Sensorträger derart ausgebildet, dass der Prüfsensor bei einer Bewegung der Schlitteneinheiten keine Horizontalbewegung ausführt. Ein durch die Schlitteneinheiten verursachtes seitliches Auslenken des Prüfsensors wird somit vermieden. Der Prüfsensor wird somit durch die Bewegung der Schlitteneinheiten nicht aus der geeigneten Horizontalposition herausbewegt. Der Sensorträger kann derart ausgebildet sein, dass der Prüfsensor stets mittig zwischen den Schlitteneinheiten positioniert ist. Alternativ kann der Sensorträger derart ausgebildet sein, dass sich der Abstand zwischen dem Prüfsensor und einer ersten Schlitteneinheit und der Abstand zwischen dem Prüfsensor und einer zweiten Schlitteneinheit temporär oder dauerhaft voneinander unterscheidet. Der Prüfsensor kann Bestandteil der Positioniereinrichtung sein. In diesem Fall ist der Prüfsensor an dem Sensorträger befestigt. Der Prüfsensor kann beispielsweise ein Oberflächenscanner sein. Ferner kann der Prüfsensor ein Bildsensor und/oder ein Bestandteil einer Prüfkamera sein.

In einer bevorzugten Ausführungsform der erfindungsgemäßen Positioniereinrichtung ist der Sensorträger zwischen den zwei Schlitteneinheiten an der Führungseinrichtung fixiert. Der Sensorträger ist vorzugsweise nicht entlang der Führungseinrichtung verfahrbar. Somit lassen sich die Schlitteneinheiten durch ein lineares Verfahren entlang der Führungseinrichtung auf den Sensorträger zu und von dem Sensorträger weg bewegen. Der Sensorträger ist vorzugsweise derart angeordnet und ausgebildet, dass die Horizontalposition des Prüfsensors bei einer Bewegung der Schlitteneinheiten nicht verändert wird.

In einer weiteren bevorzugten Ausführungsform der erfindungsgemäßen Positioniereinrichtung sind die zwei Schlitteneinheiten mittels einer, insbesondere mechanischen, Koppeleinrichtung derart kinematisch miteinander gekoppelt, dass die Schlitteneinheiten über die beweglichen Halterungen gegenläufig bewegbar sind. Die Schlitteneinheiten bewegen sich bei einer Bewegung der Halterungen, an welchen die Positioniereinrichtung aufgehängt ist, entweder aufeinander zu oder voneinander weg. Der Abstand der ersten Schlitteneinheit zu dem Prüfsensor und der Abstand der zweiten Schlitteneinheit zu dem Prüfsensor kann stets identisch sein. Wenn der Prüfsensor nicht mittig zwischen den Schlitteneinheiten positioniert ist, kann sich der Abstand der ersten Schlitteneinheit zu dem Prüfsensor und der Abstand der zweiten Schlitteneinheit zu dem Prüfsensor auch temporär oder dauerhaft voneinander unterscheiden.

In einer Weiterbildung der erfindungsgemäßen Positioniereinrichtung umfasst die Koppeleinrichtung einen umlaufenden Riemen, wobei die Schlitteneinheiten an unterschiedlichen Abschnitten des Riemens fixiert sind. Der umlaufende Riemen umfasst vorzugsweise zwei gegenüberliegende Riementrume, wobei ein erster Riementrum ein obenliegender Riementrum ist und ein zweiter Riementrum ein untenliegender Riementrum ist. Die erste Schlitteneinheit ist vorzugsweise an dem ersten Riementrum befestigt, wobei die zweite Schlitteneinheit vorzugsweise an dem zweiten Riementrum befestigt ist.

Alternativ zu einem umlaufenden Riemen kann die Koppeleinrichtung auch andere mechanische Kopplungen aufweisen, welche gewährleisten, dass die Schlitteneinheiten stets entweder synchron zum Prüfsensor hin oder synchron vom Prüfsensor weg bewegt werden. Hierzu können beispielsweise auch gegenläufige Spindeln eingesetzt werden.

Es ist ferner eine erfindungsgemäße Positioniereinrichtung vorteilhaft, bei welcher die jeweiligen Aufhängestrukturen ein umlaufendes Lager zur Aufnahme von Haltestreben der Halterungen der Prüfmaschine aufweisen. Die Halterungen können außerdem Zentrierwellen aufweisen, welche von den Haltestreben getragen werden und welche zum Positionieren des zu prüfenden Reifens in der Reifenprüfmaschine dienen.

Die der Erfindung zugrundeliegende Aufgabe wird ferner durch eine Reifenprüfmaschine der eingangs genannten Art gelöst, wobei die Positioniereinrichtung der erfindungsgemäßen Reifenprüfmaschine nach einer der vorstehend beschriebenen Ausführungsformen ausgebildet ist. Hinsichtlich der Vorteile und Modifikationen der erfindungsgemäßen Reifenprüfmaschine wird zunächst auf die Vorteile und Modifikationen der erfindungsgemäßen Positioniereinrichtung verwiesen.

Die Positionen der Halterungen der Reifenprüfmaschine werden in Abhängigkeit des zu prüfenden Reifens, insbesondere in Abhängigkeit der Geometrie und/oder Größe des zu prüfenden Reifens, eingestellt. Die Bewegung der Halterungen in der horizontalen Ebene werden auf die Schlitteneinheiten der Positioniereinrichtung übertragen. Durch die gegenläufige kinematische Kopplung der Schlitteneinheiten behält der an dem Sensorträger befestigte Prüfsensor unabhängig von der Reifengeometrie und/oder Reifengröße stets seine Horizontalposition zwischen den Halterungen bei. In der vertikalen Richtung bewegt sich der Prüfsensor gleichläufig zu den Halterungen. Dadurch stellt sich unabhängig von der Reifengeometrie und/oder Reifengröße stets ein gleichbleibender oder im Wesentlichen gleichbleibender Vertikalabstand zwischen dem Prüfsensor und einem durch den Prüfsensor zu prüfenden Prüfbereich des Reifens ein.

In einer bevorzugten Ausführungsform der erfindungsgemäßen Reifenprüfmaschine weisen die beweglichen Halterungen jeweils eine bewegliche, insbesondere schwenkbare, Haltestrebe auf, wobei sich von den Haltestreben getragene Zentrierwellen während der Prüfung des Reifens durch eine zentrale Ausnehmung des zu prüfenden Reifens erstrecken. Der zu prüfende Reifen wird von mehreren, beispielsweise vier, Zentrierwellen der Reifenprüfmaschine verspannt. Hierzu werden die Zentrierwellen samt der Haltestreben während des Verspannens des zu prüfenden Reifens soweit nach außen bewegt, bis die Zentrierwellen in Kontakt mit den umlaufenden Reifenwülsten des zu prüfenden Reifens kommen. Nach erfolgter Verspannung des zu prüfenden Reifens sind die Zentrierwellen vorzugsweise äquidistant von der Mittelachse des zu prüfenden Reifens beabstandet.

Die erfindungsgemäße Reifenprüfmaschine wird ferner dadurch vorteilhaft weitergebildet, dass zumindest eine Zentrierwelle dazu eingerichtet ist, während der Reifenprüfung zum Rotieren des zu prüfenden Reifens rotierend angetrieben zu werden. Die Drehbewegung der zumindest einen Zentrierwelle wird folglich aufgrund der Verspannung des zu prüfenden Reifens an den zu prüfenden Reifen übergeben, sodass dieser während der Reifenprüfung eine Drehbewegung ausführt. Mittels des Prüfsensors kann somit ein umlaufender Abschnitt des zu prüfenden Reifens untersucht werden, ohne dass eine Drehbewegung des Prüfsensors erforderlich ist.

Die der Erfindung zugrundeliegende Aufgabe wird ferner durch ein Verfahren der eingangs genannten Art gelöst, wobei das Bewegen des Sensorträgers im Rahmen des erfindungsgemäßen Verfahrens das Bewegen von beweglichen Halterungen der Reifenprüfmaschine, an welchen die Positioniereinrichtung über Aufhängestrukturen von zwei Schlitteneinheiten aufgehangen ist, erfolgt. Durch das Bewegen der beweglichen Halterungen der Reifenprüfmaschine wird ein lineares Verfahren der zwei Schlitteneinheiten entlang der Führungseinrichtung verursacht. Das erfindungsgemäße Verfahren wird vorzugsweise mittels einer Positioniereinrichtung nach einer der vorstehend beschriebenen Ausführungsformen ausgeführt. Hinsichtlich der Vorteile und Modifikationen des erfindungsgemäßen Verfahrens wird somit zunächst auf die Vorteile und Modifikationen der erfindungsgemäßen Positioniereinrichtung verwiesen.

Das Bewegen der beweglichen Halterungen der Reifenprüfmaschine erfolgt vorzugsweise durch ein Verschwenken der Halterungen der Reifenprüfmaschine. Die Halterungen der Reifenprüfmaschine umfassen vorzugsweise Zentrierwellen, über welche der zu prüfende Reifen verspannt werden kann. Einzelne oder sämtliche Halterungen der Reifenprüfmaschine können ferner Haltestreben umfassen, wobei die Positioniereinrichtung an den Haltestreben aufgehangen sein kann.

In einer weiteren bevorzugten Ausführungsform des erfindungsgemäßen Verfahrens bewegen sich die zwei Schlitteneinheiten beim Bewegen der Halterungen der Reifenprüfmaschine gegenläufig, wobei das Bewegen der Halterungen der Reifenprüfmaschine vorzugsweise zu einer Bewegung eines Riemens der Positioniereinrichtung führt, an welchem die zwei Schlitteneinheiten fixiert sind. Die zwei Schlitteneinheiten sind vorzugsweise mittels einer, insbesondere mechanischen, Koppeleinrichtung kinematisch miteinander gekoppelt. Der Riemen, an welchem die zwei Schlitteneinheiten fixiert sind, ist vorzugsweise Bestandteil der Koppeleinrichtung. Die Schlitteneinheiten bewegen sich bei einer Bewegung der Halterungen der Reifenprüfmaschine entweder aufeinander zu oder voneinander weg. Dies wird dadurch erreicht, dass die Schlitteneinheiten an gegenüberliegenden Riementrumen des Riemens fixiert sind.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel der erfindungsgemäßen Reifenprüfmaschine in einer schematischen Frontansicht;
- Fig. 2: ein Ausführungsbeispiel der erfindungsgemäßen Positioniereinrichtung in einer schematischen Perspektivdarstellung;
- Fig. 3: eine Führungseinrichtung samt Schlitteneinheiten einer erfindungsgemäßen Positioniereinrichtung in einer schematischen Perspektivdarstellung;
- Fig. 4: Bestandteile einer erfindungsgemäßen Reifenprüfmaschine in einer perspektivischen Darstellung;
- Fig. 5: Bestandteile der in der Fig. 4 teilweise abgebildeten Reifenprüfmaschine in einer Frontansicht; und
- Fig. 6: einen Detailausschnitt der in der Fig. 4 teilweise abgebildeten Reifenprüfmaschine.

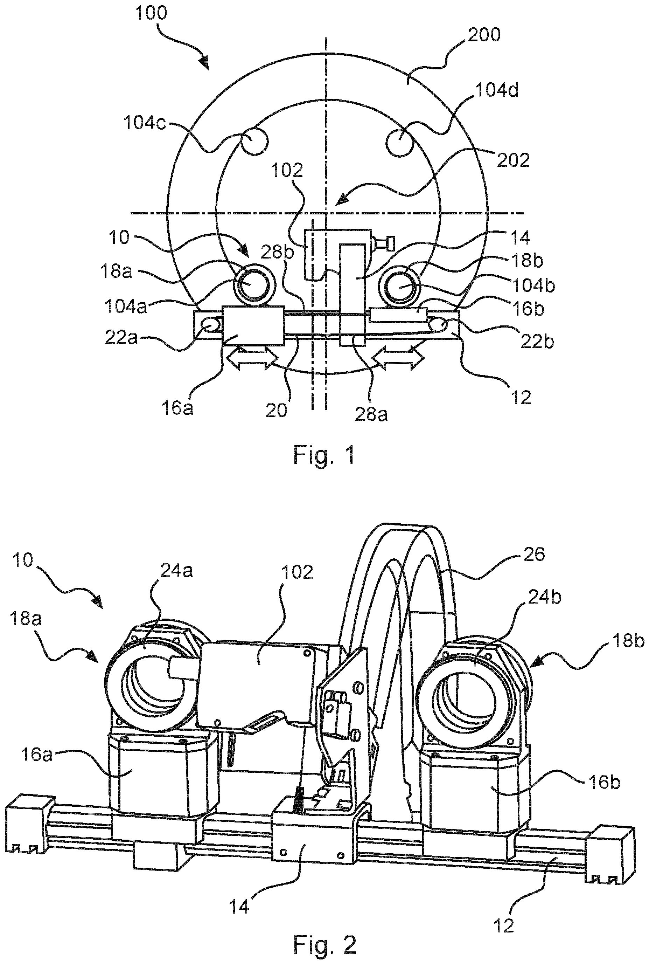

Die Fig. 1 zeigt eine Reifenprüfmaschine 100, welche eine Positioniereinrichtung 10 für einen Prüfsensor 102 aufweist. Die Reifenprüfmaschine 100 umfasst insgesamt vier bewegliche Halterungen 104a-104d, wobei der zu prüfende Reifen 200 durch die Halterungen 104a-104d verspannt ist. Die Halterungen 104a-104d erstrecken sich durch eine zentrale Ausnehmung des zu prüfenden Reifens 200 und stehen in Kontakt mit den umlaufenden Reifenwülsten des zu prüfenden Reifens 200.

Die Positioniereinrichtung 100 ist an den Halterungen 104a, 104b aufgehangen. Hierzu weist die Positioniereinrichtung 10 Aufhängestrukturen 18a, 18b auf, wobei die Aufhängestrukturen 18a, 18b Bestandteile von Schlitteneinheiten 16a, 16b der Positioniereinrichtung 10 sind.

Die Reifenprüfmaschine 100 stellt die Positionen der Halterungen 104a-104d in Abhängigkeit des zu prüfenden Reifens 200 ein. Konkret wird die Position der Halterungen 104a-104d in Abhängigkeit der Geometrie und/oder Größe des zu prüfenden Reifens 200 eingestellt. Die Bewegung der Halterungen 104a, 104b in der horizontalen Ebene wird auf die Schlitteneinheiten 16a, 16b der Positioniereinrichtung 10 übertragen.

Die Schlitteneinheiten 16a, 16b sind mit einer als Führungsschiene ausgebildeten Führungseinrichtung 12 verbunden und linear entlang der Führungseinrichtung 12 verfahrbar. Die Schlitteneinheiten 16a, 16b sind mittels einer mechanischen Koppeleinrichtung derart kinematisch miteinander gekoppelt, dass die Schlitteneinheiten 16a, 16b über die beweglichen Halterungen 104a, 104b gegenläufig bewegbar sind. Die Koppeleinrichtung umfasst einen umlaufenden Riemen 20, welcher mittels Umlenkrollen 22a, 22b umgelenkt wird.

Der Riemen 20 weist einen unteren Riementrum 28a und einen oberen Riementrum 28b auf. Die Schlitteneinheit 16a ist an dem unteren Riementrum 28a fixiert. Die Schlitteneinheit 16b ist an dem oberen Riementrum 28b fixiert. Durch die gegenläufige kinematische Kopplung der Schlitteneinheiten 16a, 16b über den Riemen 20 behält der an einem Sensorträger 14 befestigte Prüfsensor 102 unabhängig von der Größe und/oder Geometrie des zu prüfenden Reifens stets seine Horizontalposition zwischen den Halterungen 104a, 104b bei. Der Sensorträger 14, an welchem der Prüfsensor 102 befestigt ist, ist unbeweglich an der Führungseinrichtung 12 fixiert. Während der Reifenprüfung erfolgt eine Reifenrotation um die Rotationsachse 202.

In der vertikalen Richtung bewegt sich der Prüfsensor 102 gleichläufig zu den Halterungen 104a, 104b. Dadurch stellt sich ein gleichbleibender oder im Wesentlichen gleichbleibender Vertikalabstand zwischen dem Prüfsensor 102 und einem durch den Prüfsensor 102 zu prüfenden Prüfbereich des Reifens 200 ein.

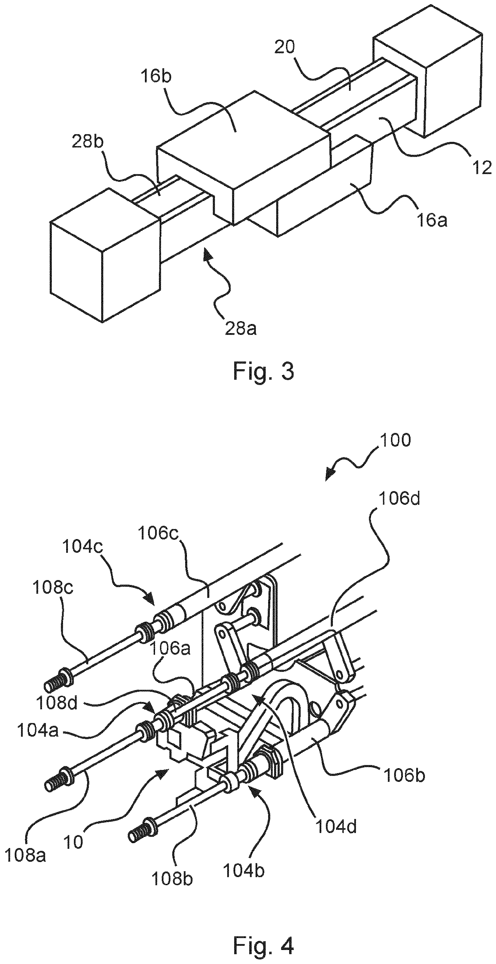

Die Fig. 2 zeigt die Ausführung der Führungseinrichtung 12 als Führungsschiene im Detail. Die Schlitteneinheiten 16a, 16b werden von der Führungseinrichtung 12 linear geführt und können an der Führungseinrichtung 12 entlanggleiten. Die Aufhängestrukturen 18a, 18b der Schlitteneinheiten 16a, 16b weisen jeweils ein umlaufendes Lager 24a, 24b zur Aufnahme einer beweglichen Haltestrebe 106, 106b der beweglichen Halterungen 104a, 104b der Reifenprüfmaschine 100 auf (vgl. Fig. 4 bis 6).

Der Sensorträger 14 ist zwischen den zwei Schlitteneinheiten 16a, 16b an der Führungseinrichtung 12 fixiert. Der Sensorträger 14 ist dabei derart angeordnet und ausgebildet, dass der Prüfsensor 102 seine Horizontalposition zwischen den Schlitteneinheiten 16a, 16b stets beibehält. Durch die kinematische Kopplung der Schlitteneinheiten 16a, 16b bewegen sich die Schlitteneinheiten 16a, 16b entweder gemeinsam auf den Sensorträger 14 bzw. den Prüfsensor 102 zu oder gemeinsam von dem Sensorträger 14 bzw. dem Prüfsensor 102 weg.

Ferner umfasst die Positioniereinrichtung 10 einen verformbaren Kabelkanal 26, welcher die zur Sensorkontaktierung erforderlichen Kabel vor externer mechanischer Beanspruchung schützt.

Die Fig. 3 zeigt eine als Führungsschiene ausgebildete Führungseinrichtung 12, entlang welcher Schlitteneinheiten 16a, 16b linear bewegt werden können. Die Schlitteneinheiten 16a, 16b sind an einem Riemen 20 fixiert. Die Führungseinrichtung 12 und die Schlitteneinheiten 16a, 16b bilden eine antriebslose Lineareinheit aus. Die Schlitteneinheit 16a ist an dem unteren Riementrum 28a fixiert, wobei die Schlitteneinheit 16b an dem oberen Riementrum 28b fixiert ist.

Die Fig. 4 bis 6 zeigen Bestandteile einer Reifenprüfmaschine 100 mit insgesamt vier beweglichen Halterungen 104a-104d. Die Halterungen 104a-104d weisen jeweils eine Haltestrebe 106a-106d auf, wobei die Haltestreben 106a-106d Zentrierwellen 108a-108d tragen. Die Zentrierwellen 108a-108d erstrecken sich während der Prüfung des Reifens 200 durch eine zentrale Ausnehmung des zu prüfenden Reifens 200. Ferner stehen die Zentrierwellen 108a-108d während der Prüfung des Reifens 200 mit den umlaufenden Reifenwülsten des zu prüfenden Reifens 200 in Kontakt. Die Zentrierwellen 108a-108d sind rotierend antreibbar und übertragen während der Reifenprüfung die Rotationsbewegung an den zu prüfenden Reifen 200. Der zu prüfende Reifen 200 führt folglich während der Reifenprüfung eine Drehbewegung aus.

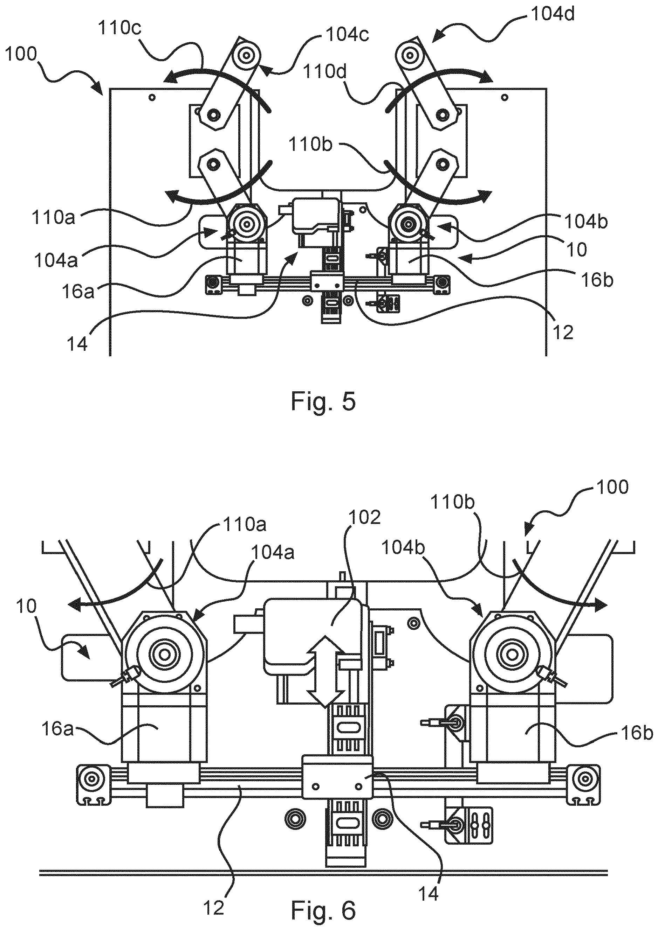

Damit die Reifenprüfmaschine 100 zum Prüfen von Reifen 200 unterschiedlicher Größe und/oder Geometrie eingesetzt werden kann, sind die Halterungen 104a-104d bewegbar, nämlich verschwenkbar, ausgebildet. Die Fig. 5 zeigt beispielhaft die Schwenkrichtungen 110a-110d, welche zur Anpassung der Position der Halterungen 104a-104d an die Größe und/oder Geometrie des zu prüfenden Reifens 200 umsetzbar sind.

Die Fig. 6 zeigt beispielhaft die Vertikalbewegung der gesamten Positioniereinrichtung 10 und somit auch die Vertikalbewegung des Prüfsensors 102, welche durch das Verschwenken der Halterungen 104a, 104b verursacht wird. Durch die kinematische Kopplung der Schlitteneinheiten 16a, 16b behalten der Sensorträger 14 und der Prüfsensor 102 stets ihre Horizontalposition zwischen den Schlitteneinheiten 16a, 16b bei. Für die Positionierung des Prüfsensors 102 ist somit kein zusätzlicher Antrieb erforderlich. Ferner erfolgt die Positionierung des Prüfsensors 102 automatisch über eine von der Reifenprüfmaschine 100 vorgegebene Teilebewegung.

### Bezugszeichenliste

### (Teil der Beschreibung)

- 10: Positioniereinrichtung
- 12: Führungseinrichtung
- 14: Sensorträger
- 16a, 16b: Schlitteneinheiten
- 18a, 18b: Aufhängestrukturen
- 20: Riemen
- 22a, 22b: Umlenkrollen
- 24a, 24b: Lager
- 26: Kabelkanal
- 28a, 28b: Riementrume

- 100: Reifenprüfmaschine
- 102: Prüfsensor
- 104a-104d: Halterungen
- 106a-106d: Haltestreben
- 108a-108d: Zentrierwellen
- 110a-110d: Schwenkrichtungen

- 200: Reifen
- 202: Rotationsachse

## Patentansprüche

1. Positioniereinrichtung (10) für einen Prüfsensor (102) einer Reifenprüfmaschine (100), mit
- einer Führungseinrichtung (12); und
- einem Sensorträger (14), an welchem der Prüfsensor (102) befestigbar ist, wobei der Sensorträger (14) an der Führungseinrichtung (12) fixiert ist;
**gekennzeichnet durch** zwei Schlitteneinheiten (16a, 16b), welche von der Führungseinrichtung (12) geführt und linear entlang der Führungseinrichtung (12) verfahrbar sind, wobei die Schlitteneinheiten (16a, 16b) jeweils eine Aufhängestruktur (18a, 18b) aufweisen, mittels welcher die Positioniereinrichtung (10) an beweglichen Halterungen (104a-104d) der Reifenprüfmaschine (100) aufhängbar ist.

2. Positioniereinrichtung (10) nach Anspruch 1,
**dadurch gekennzeichnet, dass** der Sensorträger (14) zwischen den zwei Schlitteneinheiten (16a, 16b) an der Führungseinrichtung (12) fixiert ist.

3. Positioniereinrichtung (10) nach Anspruch 1 oder 2,
**dadurch gekennzeichnet, dass** die zwei Schlitteneinheiten (16a, 16b) mittels einer, insbesondere mechanischen, Koppeleinrichtung derart kinematisch miteinander gekoppelt sind, dass die Schlitteneinheiten (16a, 16b) über die beweglichen Halterungen (104a-104d) gegenläufig bewegbar sind.

4. Positioniereinrichtung (10) nach Anspruch 3,
**dadurch gekennzeichnet, dass** die Koppeleinrichtung einen umlaufenden Riemen (20) umfasst, wobei die Schlitteneinheiten (16a, 16b) an unterschiedlichen Abschnitten des Riemens (20) fixiert sind.

5. Positioniereinrichtung (10) nach einem der vorstehenden Ansprüche,
**dadurch gekennzeichnet, dass** die jeweiligen Aufhängestrukturen (18a, 18b) ein umlaufendes Lager (24a, 24b) zur Aufnahme von Haltestreben (106a-106d) der beweglichen Halterungen (104a-104d) der Reifenprüfmaschine (100) aufweisen.

6. Reifenprüfmaschine (100), mit
- einer Positioniereinrichtung (10) für einen Prüfsensor (102); und
- beweglichen Halterungen (104a-104d), an welchen die Positioniereinrichtung (10) aufgehängt ist;
**dadurch gekennzeichnet, dass** die Positioniereinrichtung (10) nach einem der vorstehenden Ansprüche ausgebildet ist.

7. Reifenprüfmaschine (100) nach Anspruch 6,
**dadurch gekennzeichnet, dass** die beweglichen Halterungen (104a-104d) jeweils eine bewegliche, insbesondere schwenkbare, Haltestrebe (106a-106d) aufweisen, wobei sich von den Haltestreben (106a-106d) getragene Zentrierwellen (108a-108d) während der Prüfung des Reifens (200) durch eine zentrale Ausnehmung des zu prüfenden Reifens (200) erstrecken.

8. Reifenprüfmaschine (100) nach Anspruch 6 oder 7,
**dadurch gekennzeichnet, dass** zumindest eine Zentrierwelle (108a-108d) dazu eingerichtet ist, während der Reifenprüfung zum Rotieren des zu prüfenden Reifens (200) rotierend angetrieben zu werden.

9. Verfahren zum Positionieren eines Prüfsensors (102) einer Reifenprüfmaschine (100) mittels einer Positioniereinrichtung (10), insbesondere einer Positioniereinrichtung (10) nach einem der Ansprüche 1 bis 5, mit dem Schritt:
- Bewegen eines Sensorträgers (14), an welchem der Prüfsensor (102) befestigt ist, in eine für die Durchführung einer Reifenprüfung geeignete Position, wobei der Sensorträger (14) an einer Führungseinrichtung (12) fixiert ist;
**dadurch gekennzeichnet, dass** das Bewegen des Sensorträgers (14) den folgenden Schritt umfasst:
- Bewegen von beweglichen Halterungen (104a-104d) der Reifenprüfmaschine (100), an welchen die Positioniereinrichtung (10) über Aufhängestrukturen (18a, 18b) von zwei Schlitteneinheiten (16a, 16b) aufgehangen ist;
wobei durch das Bewegen der beweglichen Halterungen (104a-104d) der Reifenprüfmaschine (100) ein lineares Verfahren der zwei Schlitteneinheiten (16a, 16b) entlang der Führungseinrichtung (12) verursacht wird.

10. Verfahren nach Anspruch 9,
**dadurch gekennzeichnet, dass** sich die zwei Schlitteneinheiten (16a, 16b) beim Bewegen der Halterungen (104a-104d) der Reifenprüfmaschine (100) gegenläufig bewegen, wobei das Bewegen der Halterungen (104a-104d) der Reifenprüfmaschine (100) vorzugsweise zu einer Bewegung eines Riemens (20) der Positioniereinrichtung (10) führt, an welchem die zwei Schlitteneinheiten (16a, 16b) fixiert sind.

## Claims

1. Positioning device (10) for a test sensor (102) of a tyre testing machine (100), with
- a guiding device (12); and
- a sensor carrier (14), to which the test sensor (102) can be fastened, wherein the sensor carrier (14) is fixed on the guiding device (12);
**characterized by** two carriage units (16a, 16b), which are guided by the guiding device (12) and can be displaced linearly along the guiding device (12), wherein the carriage units (16a, 16b) each have a suspension structure (18a, 18b), by means of which the positioning device (10) can be suspended on movable mountings (104a-104d) of the tyre testing machine (100).

2. Positioning device (10) according to Claim 1,
**characterized in that** the sensor carrier (14) is fixed on the guiding device (12) between the two carriage units (16a, 16b).

3. Positioning device (10) according to Claim 1 or 2,
**characterized in that** the two carriage units (16a, 16b) are kinematically coupled to one another by means of a, in particular mechanical, coupling device in such a way that the carriage units (16a, 16b) can be moved in opposite directions to one another by way of the movable mountings (104a-104d).

4. Positioning device (10) according to Claim 3,
**characterized in that** the coupling device comprises a circulating belt (20), wherein the carriage units (16a, 16b) are fixed on different portions of the belt (20).

5. Positioning device (10) according to one of the preceding claims, **characterized in that** the respective suspension structures (18a, 18b) have a circulating bearing (24a, 24b) for receiving retaining struts (106a-106d) of the movable mountings (104a-104d) of the tyre testing machine (100).

6. Tyre testing machine (100), with
- a positioning device (10) for a test sensor (102); and
- movable mountings (104a-104d), on which the positioning device (10) is suspended;
**characterized in that** the positioning device (10) is formed according to one of the preceding claims.

7. Tyre testing machine (100) according to Claim 6,
**characterized in that** the movable mountings (104a-104d) each have a movable, in particular pivotable, retaining strut (106a-106d), wherein centring shafts (108a-108d) that are carried by the retaining struts (106a-106d) extend through a central clearance in the tyre (200) to be tested during the testing of the tyre (200).

8. Tyre testing machine (100) according to Claim 6 or 7,
**characterized in that** at least one centring shaft (108a-108d) is designed to be driven in a rotating manner during the tyre testing to rotate the tyre (200) to be tested.

9. Method for positioning a test sensor (102) of a tyre testing machine (100) by means of a positioning device (10), in particular a positioning device (10) according to one of Claims 1 to 5, with the step of:
- moving a sensor carrier (14), to which the test sensor (102) is fastened, into a position suitable for carrying out tyre testing, wherein the sensor carrier (14) is fixed on a guiding device (12);
**characterized in that** the moving of the sensor carrier (14) comprises the following step:
- moving movable mountings (104a-104d) of the tyre testing machine (100), on which the positioning device (10) is suspended by way of suspension structures (18a, 18b) of two carriage units (16a, 16b);
wherein a linear displacement of the two carriage units (16a, 16b) along the guiding device (12) is caused by the moving of the movable mountings (104a-104d) of the tyre testing machine (100).

10. Method according to Claim 9,
**characterized in that**, when the mountings (104a-104d) of the tyre testing machine (100) move, the two carriage units (16a, 16b) move in opposite directions to one another, wherein the moving of the mountings (104a-104d) of the tyre testing machine (100) preferably leads to a movement of a belt (20) of the positioning device (10) on which the two carriage units (16a, 16b) are fixed.

## Revendications

1. Dispositif de positionnement (10) destiné à un capteur de test (102) d'une machine de test de pneumatiques (100), ledit dispositif de positionnement comprenant
- un dispositif de guidage (12) ; et
- un support de capteur (14) auquel le capteur de test (102) peut être fixé, le support de capteur (14) étant fixé au dispositif de guidage (12) ;
**caractérisé par** deux unités formant chariot (16a, 16b) qui sont guidées par le dispositif de guidage (12) et qui peuvent être déplacées linéairement le long du dispositif de guidage (12), les unités formant chariot (16a, 16b) comportant chacune une structure de suspension (18a, 18b) permettant de suspendre le dispositif de positionnement (10) à des supports mobiles (104a-104d) de la machine de test de pneumatiques (100).

2. Dispositif de positionnement (10) selon la revendication 1,
**caractérisé en ce que** le support de capteur (14) est fixé au dispositif de guidage (12) entre les deux unités formant chariot (16a, 16b).

3. Dispositif de positionnement (10) selon la revendication 1 ou 2,
**caractérisé en ce que** les deux unités formant chariot (16a, 16b) sont accouplées cinématiquement l'une à l'autre au moyen d'un dispositif d'accouplement, notamment mécanique, de sorte que les unités formant chariot (16a, 16b) peuvent être déplacées dans des sens opposées par le biais des supports mobiles (104a-104d).

4. Dispositif de positionnement (10) selon la revendication 3,
**caractérisé en ce que** le dispositif d'accouplement comprend une courroie tournante (20), les unités formant chariot (16a, 16b) étant fixées à différentes portions de la courroie (20).

5. Dispositif de positionnement (10) selon l'une des revendications précédentes,
**Caractérisé en ce que** les structures de suspension respectives (18a, 18b) comportent un palier tournant (24a, 24b) destiné à recevoir des montants de support (106a-106d) des supports mobiles (104a-104d) de la machine de test de pneumatiques (100).

6. Machine de test de pneumatiques (100), comprenant
- un dispositif de positionnement (10) destiné à un capteur de test (102) ; et
- des supports mobiles (104a-104d) auxquels le dispositif de positionnement (10) est suspendu ;
**caractérisé en ce que** le dispositif de positionnement (10) est conçu selon l'une des revendications précédentes.

7. Machine de test de pneumatiques (100) selon la revendication 6, **caractérisé en ce que** les supports mobiles (104a-104d) comportent chacun un montant de support mobile, notamment pivotant (106a-106d),
des arbres de centrage (108a-108d) portés par les montants de support (106a-106d) s'étendant à travers un évidement central du pneumatique (200) à tester pendant le test du pneumatique (200).

8. Machine de test de pneumatiques (100) selon la revendication 6 ou 7, **caractérisé en ce qu'**au moins un arbre de centrage (108a-108d) est conçu pour être entraîné en rotation pour faire tourner le pneumatique (200) à tester pendant le test du pneumatique.

9. Procédé de positionnement d'un capteur de test (102) d'une machine de test de pneumatiques (100) au moyen d'un dispositif de positionnement (10), notamment un dispositif de positionnement (10) selon l'une des revendications 1 à 5, ledit procédé comprenant l'étape suivante :
- déplacer un support de capteur (14), auquel le capteur de test (102) est fixé, jusque dans une position appropriée pour effectuer un test de pneumatique, le support de capteur (14) étant fixé à un dispositif de guidage (12) ;
**caractérisé en ce que** le déplacement du support de capteur (14) comprend l'étape suivante :
- déplacer des supports mobiles (104a-104d) de la machine de test de pneumatiques (100) auxquels le dispositif de positionnement (10) est suspendu par le biais de structures de suspension (18a, 18b) de deux unités formant chariot (16a, 16b) ;
un déplacement linéaire des deux unités formant chariot (16a, 16b) le long du dispositif de guidage (12) étant provoqué par le déplacement des supports mobiles (104a-104d) de la machine de test de pneumatiques (100).

10. Procédé selon la revendication 9,
**caractérisé en ce que** les deux unités formant chariot (16a, 16b) se déplacent dans des sens opposés lors du déplacement des supports (104a-104d) de la machine de test de pneumatiques (100), le déplacement des supports (104a-104d) de la machine de test de pneumatiques (100) entraînant de préférence à un déplacement d'une courroie (20) du dispositif de positionnement (10) à laquelle les deux unités formant chariot (16a, 16b) sont fixées.
